# EUROPÄISCHE PATENTSCHRIFT

(11) **EP 3 280 689 B1**
(45) Veröffentlichungstag und Bekanntmachung des Hinweises auf die Patenterteilung: **20.02.2019**
(21) Anmeldenummer: 16712908.9
(22) Anmeldetag: 31.03.2016
(51) Int. Cl.: C04B 41/60, C04B 41/64

(54) **VERFAHREN ZUR HERSTELLUNG EINES WÄRMEDÄMMFORMKÖRPERS**
METHOD FOR PRODUCING A MOLDED HEAT-INSULATING ELEMENT
PROCÉDÉ DE PRODUCTION D'UN CORPS MOULÉ CALORIFUGE

(30) Priorität: 10.04.2015 DE 102015206433
(43) Veröffentlichungstag der Anmeldung: 14.02.2018
(73) Patentinhaber: Evonik Degussa GmbH, 45128 Essen (DE)
(72) Erfinder: GEISLER, Matthias, 63538 Großkrotzenburg (DE); MENZEL, Frank, 63456 Hanau (DE)
(86) Internationale Anmeldenummer: PCT/EP2016/057081
(87) Internationale Veröffentlichungsnummer: WO 2016/162261

(56) Entgegenhaltungen:
- WO-A1-2013/013714
- DE-A1- 3 305 375

## Beschreibung

Die Erfindung betrifft ein Verfahren zur Herstellung eines Wärmedämmformkörpers.

Bindemittelfreie Wärmedämmformkörper zeigen nach dem Pressvorgang eine Volumenexpansion. Sie werden rissig und verlieren an mechanischer Stabilität. Aufgrund der schlechten Maßhaltigkeit ist die Fertigung maßgenauer Wärmedämmformkörper schwierig.

In DE-A-3305375 wird ein Verfahren zur Herstellung von bindemittelfreien Wärmedämmformkörpern offenbart, bei dem man pyrogene Kieselsäure, Trübungsmittel und anorganische Fasern in Gegenwart von Ammoniak vermischt und diese Wärmedämmmischung anschließend verpreßt. Dabei ist wesentlich, dass der Zusatz von Ammoniak vor dem Verpressen erfolgt. Explizit wird darauf hingewiesen, dass die Beaufschlagung der verpressten Platte mit gasförmigem Ammoniak nicht zum gewünschten Ergebnis, nämlich einer Verringerung der Volumenexpansion führt.

In US6099749 wird ein Verfahren zum Verdichten einer pyrogene Kieselsäure enthaltenden Mischung offenbart, bei dem man die Mischung in Abwesenheit von Flüssigkeit mit Dampf, der Wasser und Ammoniak aufweist, behandelt, so dass eine Gewichtszunahme von mindestens 0,5 Gew.-% eintritt, und nachfolgend die so behandelte Mischung verpresst.

Ähnliches wird auch in WO2004/109026 offenbart. Dort wird ein Verfahren zur Herstellung eines Wärmedämmformkörpers offenbart, bei dem eine pyrogene Kieselsäure enthaltende Wärmedämmmischung zunächst mit gasförmigem Ammoniak behandelt wird und anschließend die so behandelte Wärmedämmmischung zu Platten verpresst wird. Dabei werden während der Vermischung Ammoniak in Mengen von 0,1 bis 50 NI/10 kg Wärmedämmmischung eingebracht. Die Zugabe des Ammoniaks kann auch nach dem Mischen, jedoch vor dem Pressvorgang, erfolgen.

Es wurde nun überraschend ein Weg gefunden, der es erlaubt, die Druckfestigkeiten von Wärmedämmformkörpern auch nach einer Verpressung zu verbessern.

Gegenstand der Erfindung ist ein Verfahren zur Herstellung eines mit Ammoniak behandelten, hydrophilen Wärmedämmformkörpers, bei dem man einen hydrophile Kieselsäure aufweisenden Wärmedämmformkörper mit Ammoniak behandelt, indem man den Wärmedämmformkörper in eine Kammer einbringt und solange gasförmigen Ammoniak zuführt bis die Druckdifferenz Δp ≥ 20 mbar beträgt.

Bei dem Wärmedämmformkörper kann es sich um eine Platte, ein Profil oder ein Rohr handeln. Das Verfahren eignet sich besonders zur Herstellung einer Wärmedämmplatte.

Dabei gilt, dass Δp = p2 - p1, mit p1 = Druck in der Kammer vor Einbringen des gasförmigen Ammoniaks, p2 = Druck in der Kammer bei der das Einbringen des gasförmigen Ammoniaks gestoppt wird.

Das erfindungsgemäße Verfahren wird bevorzugt so ausgeführt, dass 50 mbar ≤ Δp ≤ 5 bar ist. Besonders bevorzugt ist eine Ausführungsform, bei der 100 mbar ≤ Δp ≤ 500 mbar ist. Ganz besonders bevorzugt ist 200 mbar ≤ Δp ≤ 400 mbar.

In einer besonderen Ausführungsform der Erfindung wird das Verfahren so ausgeführt, dass der Druck in der Kammer vor Einbringen des gasförmigen Ammoniaks Atmosphärendruck oder mehr beträgt. In diesem Fall ist es günstig, wenn Atmosphärendruck ≤ p1 ≤ 10 bar ist. Bei diesem Überdruckverfahren wird Ammoniak in die Poren des hydrophilen Kieselsäure aufweisenden Wärmedämmformkörpers "gedrückt". Hierbei wird der parallel ablaufende Diffusionsprozess von Ammoniak in die Probe unterstützt. Der Atmosphärendruck beträgt ca. 1013 mbar.

Noch bessere Ergebnisse werden mit einer Ausführungsform erhalten, bei der man das Verfahren so ausführt, dass der Druck in der Kammer vor Einbringen des gasförmigen Ammoniaks kleiner als Atmosphärendruck ist. Insbesondere ist es günstig, wenn 0,1 mbar ≤ p1 < Atmosphärendruck mbar ist. Besonders bevorzugt ist eine Variante bei der 1 ≤ p1 ≤ 500 mbar ist. Bei dieser besonderen Ausführungsform erfolgt das Einbringen des gasförmigen Ammoniaks in eine evakuierte Kammer. Bei diesem Unterdruckverfahren wird Ammoniak in die Poren des hydrophile Kieselsäure aufweisenden Wärmedämmformkörpers "gesaugt" und optimal verteilt.

An die Kammer ist lediglich die Anforderung gestellt, dass sie die im erfindungsgemäßen Verfahren erforderlichen Drücke und Temperaturen aufrechterhalten kann.

In dem erfindungsgemäßen Verfahren wird ein eine hydrophile Kieselsäure aufweisender Wärmedämmformkörper eingesetzt. In der Regel wird eine die hydrophile Kieselsäure enthaltende Wärmedämmmischung in einem oder mehreren Schritten in ein Presswerkzeugs gefüllt und mittels Pressstempel verdichtet. Die Dichte des die hydrophile Kieselsäure enthaltenden Wärmedämmformkörpers beträgt üblicherweise 30 bis 500 g/l, bevorzugt 70 bis 350 g/l und besonders bevorzugt zwischen 120 bis 200 g/l.

Es hat sich gezeigt, dass der eingesetzte, hydrophile Kieselsäure enthaltende Wärmedämmformkörper auch Wasser enthalten kann. In einem Bereich bis zu 5 Gew.-% Wasser läßt sich das erfindungsgemäße Verfahren ohne Nachteile ausführen. In der Regel werden hydrophile Kieselsäure enthaltende Wärmedämmformkörper mit einem Anteil an Wasser von 0,5 bis 3 Gew.-% eingesetzt.

Ebenso ist es möglich, dass Wasserdampf in die Kammer eingebracht wird. Sein Anteil sollte nicht höher sein als 10 Vol.-%, bezogen auf die insgesamt eingebrachte Gasmenge und Dampfmenge.

Dagegen soll der eingesetzte, hydrophile Kieselsäure enthaltende Wärmedämmformkörper keine Bindemittel enthalten, da diese die Wärmedämmeigenschaften negativ beeinflussen können.

Die Zeitspanne in der der hydrophile Wärmedämmformkörper in der Kammer belassen wird, vom Zeitpunkt an, an dem das gasförmige Ammoniak zugegeben wird, ist unter anderem von der Zusammensetzung des Wärmedämmformkörpers und dessen Dicke abhängig. In der Regel beträgt die Zeitspanne 10 Minuten bis 100 Stunden, bevorzugt 0,5 bis 20 Stunden.

Die geeignete Temperatur in der Kammer ist ebenso von der Zusammensetzung des Wärmedämmformkörpers und dessen Dicke abhängig. Die Temperatur, bei der besten Ergebnisse zu erwarten sind, ist ein Bereich zwischen 0 und 100°C, bevorzugt 15 bis 90°C

Nachfolgend kann der Wärmedämmformkörper noch thermisch behandelt werden um den Anteil an Ammoniak zu minimieren. Dies erfolgt am besten im Vakuum bei erhöhter Temperatur, beispielsweise bei 1 bis 80 mbar und einer Temperatur von 20 bis 90°C. Der so behandelte Wärmedämmformkörper weist bevorzugt weniger als 0,1 Gew.-%, besonders bevorzugt weniger als 100 ppm ganz besonders bevorzugt 1 bis 20 ppm Ammoniak auf.

Der Hauptbestandteil der Wärmedämmmischung ist hydrophile Kieselsäure. Als hydrophile Kieselsäure kommen vor allem pyrogene Kieselsäuren, Fällungskieselsäuren und/oder ein Siliciumdioxidaerogele in Betracht.

Die besten Ergebnisse werden mit pyrogenen Kieselsäuren erhalten. Die BET-Oberfläche der pyrogenen Kieselsäure beträgt bevorzugt 90 m²/g oder mehr, besonders bevorzugt von 150 bis 500 m²/g. Diese werden durch Flammenhydrolyse von Siliciumverbindungen, wie beispielsweise Chlorsilanen, hergestellt. Bei diesem Verfahren wird ein hydrolysierbares Siliciumhalogenid mit einer Flamme zur Reaktion gebracht, die durch Verbrennung von Wasserstoff und eines sauerstoffhaltigen Gases gebildet worden ist. Die Verbrennungsflamme stellt dabei Wasser für die Hydrolyse des Siliciumhalogenides und genügend Wärme zur Hydrolysereaktion zur Verfügung. Eine so hergestellte Kieselsäure wird als pyrogene Kieselsäure bezeichnet. Bei diesem Prozess werden zunächst Primärpartikel gebildet, die nahezu frei von inneren Poren sind. Diese Primärteilchen verschmelzen während des Prozesses über sogenannte "Sinterhälse" zu Aggregaten. Aufgrund dieser Struktur ist pyrogen hergestellte Kieselsäure ein idealer Wärmedämmstoff, da die Aggregatstruktur die Wärmeübertragung durch Festkörperleitfähigkeit über die "Sinterhälse" minimiert und eine ausreichend hohe Porosität erzeugt.

Daneben kann die Mischung noch Trübungsmittel, Fasern und/oder feinteilige anorganische Zusatzstoffe enthalten. Eine typische Zusammensetzung ist 45 bis 95 Gew.-%, vorzugsweise 55 bis 90 Gew.-%, Kieselsäure, 5 bis 30 Gew.-%, vorzugsweise 7 bis 15 Gew.-%, Trübungsmittel, 5 bis 35 Gew.-%, vorzugsweise 10 bis 30 Gew.-% feinteilige anorganische Zusatzstoffe und 0 bis 12 Gew.-%, vorzugsweise 1 bis 5 Gew.-%, Fasern. Bei den Trübungsmitteln kann es sich um Titanoxide, Zirkonoxide, Ilmenite, Eisentitanate, Eisenoxide, Zirkonsilikate, Siliciumcarbid, Manganoxide, Graphite und/oder Ruße handeln. Die Partikelgröße der Trübungsmittel liegt in der Regel zwischen 0,1 bis 25 µm. Bei Siliciumcarbid und Titanoxiden ist der mittlerer Partikeldurchmesser d₅₀ bevorzugt 1 bis 10 µm, besonders bevorzugt 2 bis 8 µm.

Unter einer hydrophilen Kieselsäure ist im Rahmen dieser Erfindung eine zu verstehen, die an ihrer Oberfläche keine organischen Gruppen, wie beispielsweise Alkylgruppen, trägt, die ihr einen hydrophoben, wasserabweisenden Charakter verleihen würden. Vielmehr sollen die sich an der Oberfläche befindlichen Gruppen weitestgehend oder vollständig aus Si-OH- und Si-O-Si-Gruppen bestehen. Von einer hydrophoben Kieselsäure spricht man dann, wenn die an der Oberfläche sich befindlichen Si-OH- und Si-O-Si-Gruppen wenigstens teilweise mit einer organischen Verbindung umgesetzt werden, die dem Material einen hydrophoben, wasserabweisenden Charakter verleihen.

Ein weiterer Gegenstand der Erfindung ist ein Verfahren zur Herstellung eines hydrophobe Kieselsäure enthaltenden Wärmedämmformkörpers, bei dem man einen hydrophilen Wärmedämmformköroer gemäß dem erfindungsgemäßen Verfahren herstellt und diesen mit einer Organosiliciumverbindung behandelt.

Bei diesem Verfahren ist es vorteilhaft, wenn der mit Ammoniak behandelte, hydrophile Wärmedämmformkörper nicht mehr als 2 Gew.-% Wasser enthält. Besonders bevorzugt ist 0 bis 1,5 Gew.-%.

In einer besonderen Ausführungsform der Erfindung wird die Behandlung in einer Kammer durchgeführt, die den nach dem erfindungsgemäßen Verfahren mit Ammoniak behandelten, hydrophilen Wärmedämmformkörper enthält, und man in die Kammer solange eine, unter den Reaktionsbedingungen dampfförmige Organosiliciumverbindung einbringt, bis die Druckdifferenz Δp ≥ 20 mbar beträgt.

Die Organosiliciuimverbindung selbst kann in flüssiger oder dampfförmiger Form in die Kammer eingebracht werden. In flüssiger Form eingebracht, etwa durch Eindüsen, soll sie unter den in der Kammer herrschenden Bedingungen in den dampfförmigen Zustand übergehen. Bevorzugt wird eine dampfförmige Organosiliciumverbindung eingebracht.

Δp = p2 - p1, mit p1 = Druck in der Kammer vor Einbringen der Orgaosiliciumverbindung , p2 = Druck in der Kammer bei der das Einbringen der Organosiliciumverbindung gestoppt wird. Das erfindungsgemäße Verfahren wird so ausgeführt, dass bevorzugt 50 mbar ≤ Δp ≤ 5 bar, besonders bevorzugt 100 mbar ≤ Δp ≤ 500 mbar, ganz besonders bevorzugt 200 mbar ≤ Δp ≤ 400 mbar ist. In einer besonderen Ausführungsform der Erfindung wird das Verfahren so ausgeführt, dass der Druck in der Kammer vor Einbringen der Organosiliciumverbindung kleiner als Atmosphärendruck ist. Insbesondere ist es günstig, wenn 0,1 mbar ≤ p1 ≤ Atmosphärendruck mbar ist. Besonders bevorzugt ist eine Variante bei der 1 ≤ p1 ≤ 500 mbar ist. Bei dieser besonderen Ausführungsform erfolgt das Einbringen der Organosiliciumverbindung also in eine evakuierte Kammer. Bei diesem Unterdruckverfahren wird die Organosiliciumverbindung in die Poren des hydrophilen Formkörpers "gesaugt" und optimal verteilt.

Die eingesetzten Organosiliciumverbindungen reagieren mit den Silanolgruppen des hydrophile Kieselsäure enthaltenden Wärmedämmformkörpers und gestalten diesen dadurch wasserabstoßend.

Für das erfindungsgemäße Verfahren kann als Organosiliciumverbindung bevorzugt ein oder mehrere Organosilane aus der Gruppe bestehend aus Rₙ-Si-X₄₋ₙ, R₃Si-Y-SiR₃, RₙSiₙOₙ, (CH₃)₃-Si-(O-Si(CH₃)₂)ₙ-OH, HO-Si(CH₃)₂-(O-Si(CH₃)₂)ₙ-OH, mit n = 1-8; R = -H, -CH₃, -C₂H₅; X = -Cl, -Br; - OCH₃, -OC₂H₅, -OC₃H₈, Y= NH, O eingesetzt werden.

Explizit seien (CH₃)₃SiCl, (CH₃)₂SiCl₂, CH₃SiCl₃, (CH₃)₃SiOC₂H₅, (CH₃)₂Si(OC₂H₅)₂, CH₃Si(OC₂H₅)₃, (CH₃)₃SiNHSi(CH₃)₃, (CH₃)₃SiOSi(CH₃)₃, Octamethyltetracyclosiloxan, Hexamethyltricyclosiloxan und (CH₃)₃Si(OSi(CH₃)₂)₄OH genannt. Bevorzugt werden (CH₃)₃SiCl, (CH₃)₂SiCl₂, CH₃SiCl₃, (CH₃)₃SiNHSi(CH₃)₃ und (CH₃)₈Si₄O₄ eingesetzt. Besonders bevorzugt wird (CH₃)₃SiNHSi(CH₃)₃ eingesetzt.

Die Temperatur in der Kammer soll, abhängig von der eingesetzten Organosiliciumverbindung, 20°C bis 300°C betragen. Bevorzugt wird eine Temperatur von 50 bis 200°C gewählt.

Die Zeitspanne in der der hydrophile, mit Ammoniak behandelte Wärmedämmformkörper in der Kammer belassen wird, vom Zeitpunkt an, an dem die Organosiliciumverbindung zugegeben wird, ist unter anderem von der Zusammensetzung des Wärmedämmformkörpers und dessen Dicke abhängig. In der Regel beträgt die Zeitspanne 1 Minute bis1 Stunde, bevorzugt 2 bis 20 Minuten.

Nach Beendigung der Behandlung kann die eventuell überschüssige Organosiliciumverbindung und Reaktionsprodukte aus dem nun hydrophoben Wärmedämmformkörper durch Aufheizen entfernt werden.

Ein besondere Ausführungsform der Erfindung sieht ein Verfahren zur Herstellung hydrophober Kieselsäure enthaltender Wärmedämmformkörper vor, bei dem die Hydrophobierung mit (CH₃)₃SiNHSi(CH₃)₃ durchgeführt wird und bei dem der während des Hydrophobierungsschrittes gebildete Ammoniak in der Behandlung des hydrophilen Wärmedämmformkörpers eingesetzt wird. Dieses Verfahren ist dadurch gekennzeichnet, dass man
a) einen hydrophile, pyrogene Kieselsäure aufweisenden Wärmedämmformkörper mit Ammoniak behandelt, indem man diesen in eine Kammer einbringt und solange gasförmigen Ammoniak zuführt bis die Druckdifferenz Δp ≥ 20 mbar beträgt,
b) nachfolgend den so behandelten Wärmedämmformkörper mit (CH₃)₃Si-NH-Si(CH₃)₃ unter Bildung von Ammoniak behandelt,
c) den so erhaltenen Ammoniak, gegebenenfalls mit weiterem Ammoniak, einer anderen Kammer zuführt, in der sich ein hydrophiler, pyrogene Kieselsäure aufweisender Wärmedämmformkörper befindet, wobei solange Ammoniak zugeführt wird bis die Druckdifferenz Δp ≥ 20 mbar beträgt.

### Beispiele

Angelehnt an DIN ISO 844:2009 und EN 826:1996. Im Gegensatz zu den Prüfvorschriften wird bis 1 bar belastet und die Stauchung ausgewertet. Außerdem wurde nur eine Einzelmessung durchgeführt, ohne Klimatisierung der Proben vor der Prüfung.

Beispiel 1a (Vergleichsbeispiel): Eine Wärmedämmmischung bestehend aus 76,2 Gew.-% AEROSIL 300 (pyrogene Kieselsäure; Evonik Industries; BET-Oberfläche 300 m²/g), 19 Gew.-% Siliciumcarbid (Silcar G14; ESK; d₅₀ = 2,73 µm) und 5 Gew.-% Glasfasern (mittlerer Faserdurchmesser ca. 9 µm; Länge ca. 6 mm) wird zu einer Wärmedämmplatte verpresst. Die Wärmedämmplatte weist eine Dichte von 149 g/cm³ auf.

Beispiel 2a (gemäß Erfindung): Ein Abschnitt der Wärmedämmplatte aus Beispiel 1a mit den Dimension 70 x 70 x 20 mm wird in einen Exsikkator überführt. Der Druck im Exsikkator wird auf 20 mbar reduziert. Anschließend wird soviel dampfförmiges Ammoniak in den Exsikkator gegeben, bis der Druck auf 300 mbar steigt. Die Wärmedämmplatte verbleibt nun für 2 Stunden im Exsikkator. Die Dichte ist unverändert.

Beispiel 2b (gemäß Erfindung): analog Beispiel 2a. Die Wärmedämmplatte verbleibt für 20 Stunden im Exsikkator.

In der Tabelle sind die Werte für die Stauchung der Wärmedämmplatten wiedergegeben. Es zeigt sich, dass die Stauchung der nach dem erfindungsgemäßen Verfahren hergestellten Wärmedämmplatten signifikant niedriger ist im Vergleich zu unbehandelten Platten. Die Ergebnisse zeigen auch, dass entgegen den im Stand der Technik gemachten Aussagen, durch die Behandlung bereits verpresste Wärmedämmplatten gehärtet werden können.

**Tabelle: Stauchung bei Druckbeanspruchung**

| Beispiel | Reaktionszeit [h] | Stauchung bei 1 bar [%] |
|---|---|---|
| 1a | - | 16,4 |
| 2a | 2 | 14,9 |
| 2b | 20 | 8,8 |

## Patentansprüche

1. Verfahren zur Herstellung eines mit Ammoniak behandelten, hydrophilen Wärmedämmformkörpers, bei dem man einen hydrophile Kieselsäure aufweisenden Wärmedämmformkörper mit Ammoniak behandelt,
**dadurch gekennzeichnet, dass** man den Wärmedämmformkörper in eine Kammer einbringt und solange gasförmigen Ammoniak zuführt, bis die Druckdifferenz Δp ≥ 20 mbar beträgt, wobei gilt, dass Δp = p2-p1, mit p1 = Druck in der Kammer vor Einbringen des gasförmigen Ammoniaks, p2 = Druck in der Kammer bei der das Einbringen des gasförmigen Ammoniaks gestoppt wird.

2. Verfahren nach Anspruch 1, **dadurch gekennzeichnet, dass**
der Druck in der Kammer vor dem Einbringen des Ammoniaks kleiner als Atmosphärendruck ist.

3. Verfahren nach den Ansprüchen 1 oder 2, **dadurch gekennzeichnet, dass**
der hydrophile Wärmedämmformkörper bis zu 5 Gew.-% Wasser enthält.

4. Verfahren nach den Ansprüchen 1 bis 3, **dadurch gekennzeichnet, dass**
zusätzlich Wasserdampf in die Kammer eingebracht wird.

5. Verfahren nach den Ansprüchen 1 bis 4, **dadurch gekennzeichnet, dass**
man den eingesetzten hydrophilen Wärmedämmformkörper vom Zeitpunkt an, an dem das gasförmige Ammoniak zugegeben wird noch 1 bis 100 Stunden in der Kammer belässt.

6. Verfahren nach den Ansprüchen 1 bis 5, **dadurch gekennzeichnet, dass**
die Temperatur in der Kammer zwischen 0 und 100°C ist.

7. Verfahren nach den Ansprüchen 1 bis 6, **dadurch gekennzeichnet, dass**
als hydrophile Kieselsäure eine pyrogene Kieselsäure eingesetzt wird.

8. Verfahren zur Herstellung eines hydrophobe Kieselsäure enthaltenden Wärmedämmformkörpers, **dadurch gekennzeichnet, dass**
man einen hydrophile Kieselsäure aufweisenden Wärmedämmformkörper mit Ammoniak behandelt, dabei den Wärmedämmformkörper in eine Kammer einbringt und solange gasförmigen Ammoniak zuführt, bis die Druckdifferenz Δp ≥ 20 mbar beträgt, und mit einer Organosiliciumverbindung behandelt, wobei gilt, dass Δp = p2-p1, mit p1 = Druck in der Kammer vor Einbringen des gasförmigen Ammoniaks, p2 = Druck in der Kammer bei der das Einbringen des gasförmigen Ammoniaks gestoppt wird.

9. Verfahren nach Anspruch 8, **dadurch gekennzeichnet, dass**
man zur Behandlung mit der Organosiliciumverbindung den mit Ammoniak behandelten, hydrophilen Wärmedämmformkörper in eine Kammer einbringt, und in die Kammer solange eine dampfförmige Organosiliciumverbindung einbringt, bis die Druckdifferenz Δp ≥ 20 mbar beträgt.

10. Verfahren nach Anspruch 9, **dadurch gekennzeichnet, dass**
der mit Ammoniak behandelte, hydrophile Wärmedämmformkörper nicht mehr als 2 Gew.-% Wasser enthält.

11. Verfahren nach Anspruch 9 oder 10, **dadurch gekennzeichnet, dass**
der Druck in der Kammer vor dem Einbringen des Organosiliciumverbindung kleiner als Atmosphärendruck ist.

12. Verfahren nach den Ansprüchen 9 bis 11, **dadurch gekennzeichnet, dass**
die Temperatur in der Kammer 20 bis 300°C ist.

13. Verfahren nach den Ansprüchen 9 bis 12, **dadurch gekennzeichnet, dass** man den mit Ammoniak behandelten, hydrophilen Wärmedämmformkörper vom Zeitpunkt an, an dem das Organosiliciumverbindung zugegeben wird noch 1 Minute bis 1 Stunde in der Kammer belässt.

14. Verfahren zur Herstellung hydrophober Kieselsäure enthaltender Wärmedämmformkörper, **dadurch gekennzeichnet, dass** man
a) einen hydrophile, pyrogene Kieselsäure aufweisenden Wärmedämmformkörper mit Ammoniak behandelt, indem man diesen in eine Kammer einbringt und solange gasförmigen Ammoniak zuführt bis die Druckdifferenz Δp ≥ 20 mbar beträgt, wobei gilt, dass Δp = p2-p1, mit p1 = Druck in der Kammer vor Einbringen des gasförmigen Ammoniaks, p2 = Druck in der Kammer bei der das Einbringen des gasförmigen Ammoniaks gestoppt wird,
b) nachfolgend den so behandelten Wärmedämmformkörper mit (CH₃)₃Si-NH-Si(CH₃)₃ unter Bildung von Ammoniak behandelt,
c) den so erhaltenen Ammoniak, gegebenenfalls mit weiterem Ammoniak, einer anderen Kammer zuführt, in der sich ein hydrophiler, pyrogene Kieselsäure aufweisender Wärmedämmformkörper befindet, wobei solange Ammoniak zugeführt wird bis die Druckdifferenz Δp ≥ 20 mbar beträgt.

## Claims

1. Process for producing an ammonia-treated hydrophilic thermal insulation molding which comprises treating a thermal insulation molding comprising hydrophilic silica with ammonia,
**characterized in that** it comprises introducing the thermal insulation molding into a chamber and supplying gaseous ammonia until a pressure difference Δp of ≥ 20 mbar is achieved, wherein Δp = p2 - p1 where p1 = pressure in the chamber before introduction of the gaseous ammonia and p2 = pressure in the chamber at which introduction of the gaseous ammonia is halted.

2. Process according to Claim 1, **characterized in that** the pressure in the chamber before introduction of the gaseous ammonia is below atmospheric pressure.

3. Process according to Claim 1 or 2, **characterized in that**
the hydrophilic thermal insulation molding comprises up to 5 wt% water.

4. Process according to Claims 1 to 3, **characterized in that**
steam is additionally introduced into the chamber.

5. Process according to Claims 1 to 4, **characterized in that**
the hydrophilic thermal insulation molding employed is kept in the chamber for 1 to 100 hours starting from the point at which the gaseous ammonia is added.

6. Process according to Claims 1 to 5, **characterized in that**
the temperature in the chamber is between 0°C and 100°C.

7. Process according to Claims 1 to 6, **characterized in that**
the hydrophilic silica employed is a fumed silica.

8. Process for producing a thermal insulation molding comprising hydrophobic silica, **characterized in that** it comprises treating a thermal insulation molding comprising hydrophobic silica with ammonia by introducing the thermal insulation molding into a chamber and supplying gaseous ammonia until the pressure difference Δp ≥ 20 mbar is achieved and treating said molding with an organosilicon compound, wherein Δp = p2-p1 where p1 = pressure in the chamber before introduction of the gaseous ammonia, p2 = pressure in the chamber at which the introduction of the gaseous ammonia is halted.

9. Process according to Claim 8, **characterized in that** treatment with the organosilicon compound is effected by introducing the hydrophilic thermal insulation molding treated with ammonia into a chamber and introducing a vaporous organosilicon compound into the chamber until a pressure difference Δp of ≥ 20 mbar is achieved.

10. Process according to Claim 9, **characterized in that**
the ammonia-treated hydrophilic thermal insulation molding comprises not more than 2 wt% water.

11. Process according to Claim 9 or 10, **characterized in that**
the pressure in the chamber before introduction of the organosilicon compound is below atmospheric pressure.

12. Process according to Claims 9 to 11, **characterized in that**
the temperature in the chamber is 20°C to 300°C.

13. Process according to Claims 9 to 12, **characterized in that**
the ammonia-treated hydrophilic thermal insulation molding is kept in the chamber for 1 minute to 1 hour starting from the point at which the organosilicon compound is added.

14. Process for producing thermal insulation moldings comprising hydrophobic silica, **characterized in that** it comprises
a) treating a thermal insulation molding comprising hydrophilic fumed silica with ammonia by introducing said molding into a chamber and supplying gaseous ammonia until a pressure difference Δp of ≥ 20 mbar is achieved, wherein Δp = p2-p1 where p1 = pressure in the chamber before introduction of the gaseous ammonia, p2 = pressure in the chamber at which the introduction of the gaseous ammonia is halted,
b) subsequently treating the thus treated thermal insulation molding with (CH₃)₃Si-NH-Si(CH₃)₃ thus forming ammonia,
c) supplying the thus obtained ammonia, optionally with further ammonia, to another chamber in which a thermal insulation molding comprising hydrophilic fumed silica is disposed, wherein ammonia is supplied until a pressure difference Δp of ≥ 20 mbar is achieved.

## Revendications

1. Procédé de fabrication d'un corps moulé isolant thermique hydrophile traité avec de l'ammoniac, selon lequel un corps moulé isolant thermique comprenant une silice hydrophile est traité avec de l'ammoniac, **caractérisé en ce que** le corps moulé isolant thermique est introduit dans une chambre et de l'ammoniac gazeux est introduit jusqu'à ce que la différence de pression Δp ≥ 20 mbar, avec Δp = p2-p1, avec p1 = pression dans la chambre avant l'introduction de l'ammoniac gazeux, p2 = pression dans la chambre à laquelle l'introduction de l'ammoniac gazeux est arrêtée.

2. Procédé selon la revendication 1, **caractérisé en ce que** la pression dans la chambre avant l'introduction de l'ammoniac est inférieure à la pression atmosphérique.

3. Procédé selon les revendications 1 ou 2, **caractérisé en ce que** le corps moulé isolant thermique hydrophile contient jusqu'à 5 % en poids d'eau.

4. Procédé selon les revendications 1 à 3, **caractérisé en ce que** de la vapeur d'eau est en outre introduite dans la chambre.

5. Procédé selon les revendications 1 à 4, **caractérisé en ce que** le corps moulé isolant thermique hydrophile utilisé est encore laissé dans la chambre pendant 1 à 100 heures à partir du moment où l'ammoniac gazeux est ajouté.

6. Procédé selon les revendications 1 à 5, **caractérisé en ce que** la température dans la chambre est comprise entre 0 et 100 °C.

7. Procédé selon les revendications 1 à 6, **caractérisé en ce qu'**une silice pyrogénée est utilisée en tant que silice hydrophile.

8. Procédé de fabrication d'un corps moulé isolant thermique contenant une silice hydrophobe, **caractérisé en ce qu'**un corps moulé isolant thermique comprenant une silice hydrophile est traité avec de l'ammoniac, le corps moulé isolant thermique étant introduit dans une chambre et de l'ammoniac gazeux étant introduit jusqu'à ce que la différence de pression Δp ≥ 20 mbar, et traité avec un composé d'organosilicium, avec Δp = p2-p1, avec p1 = pression dans la chambre avant l'introduction de l'ammoniac gazeux, p2 = pression dans la chambre à laquelle l'introduction de l'ammoniac gazeux est arrêtée.

9. Procédé selon la revendication 8, **caractérisé en ce que**, pour le traitement avec le composé d'organosilicium, le corps moulé isolant thermique hydrophile traité avec de l'ammoniac est introduit dans une chambre, et un composé d'organosilicium gazeux est introduit dans la chambre jusqu'à ce que la différence de pression Δp ≥ 20 mbar.

10. Procédé selon la revendication 9, **caractérisé en ce que** le corps moulé isolant thermique hydrophile traité avec de l'ammoniac ne contient pas plus de 2 % en poids d'eau.

11. Procédé selon la revendication 9 ou 10, **caractérisé en ce que** la pression dans la chambre avant l'introduction du composé d'organosilicium est inférieure à la pression atmosphérique.

12. Procédé selon les revendications 9 à 11, **caractérisé en ce que** la température dans la chambre est de 20 à 300 °C.

13. Procédé selon les revendications 9 à 12, **caractérisé en ce que** le corps moulé isolant thermique hydrophile traité avec de l'ammoniac est encore laissé dans la chambre pendant 1 minute à 1 heure à partir du moment où le composé d'organosilicium est ajouté.

14. Procédé de fabrication d'un corps moulé isolant thermique contenant une silice hydrophobe, **caractérisé en ce que**
a) un corps moulé isolant thermique hydrophile comprenant une silice pyrogénée est traité avec de l'ammoniac par introduction de celui-ci dans une chambre et introduction d'ammoniac gazeux jusqu'à ce que la différence de pression Δp ≥ 20 mbar, avec Δp = p2-p1, avec p1 = pression dans la chambre avant l'introduction de l'ammoniac gazeux, p2 = pression dans la chambre à laquelle l'introduction de l'ammoniac gazeux est arrêtée, puis
b) le corps moulé isolant thermique ainsi traité est traité avec (CH₃)₃Si-NH-Si(CH₃)₃ avec formation d'ammoniac,
c) l'ammoniac ainsi obtenu, éventuellement avec de l'ammoniac supplémentaire, est introduit dans une autre chambre, dans laquelle un corps moulé isolant thermique hydrophile comprenant une silice pyrogénée se trouve, de l'ammoniac étant introduit jusqu'à ce que la différence de pression Δp ≥ 20 mbar.
